(19) Europäisches Patentamt
European Patent Office
Office européen des brevets

(11) **EP 4 209 307 A1**

(12) **EUROPÄISCHE PATENTANMELDUNG**

(43) Veröffentlichungstag:
**12.07.2023   Patentblatt 2023/28**

(21) Anmeldenummer: 22150869.0

(22) Anmeldetag: **11.01.2022**

(51) Internationale Patentklassifikation (IPC):
***B25F 5/00*** (2006.01)        ***H01M 50/247*** (2021.01)

(52) Gemeinsame Patentklassifikation (CPC):
**B25F 5/00; H01M 50/247**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Stanger, Robert**
 **87600 Kaufbeuren (DE)**

• **Hartmann, Markus**
 **87665 Mauerstetten (DE)**
• **Herold, Stefan**
 **80538 München (DE)**
• **Beltaief, Jaouher**
 **86156 Augsburg (DE)**

(74) Vertreter: **Hilti Aktiengesellschaft**
**Corporate Intellectual Property**
**Feldkircherstrasse 100**
**Postfach 333**
**9494 Schaan (LI)**

(54) **WERKZEUGMASCHINEN MIT STROMLEITER, SOWIE ENERGIEVERSORGUNGSVORRICHTUNG**

(57)    Die vorliegende Erfindung betrifft eine Werkzeugmaschine, wobei die Werkzeugmaschine mindestens einen Stromleiter aufweist, wobei ein Umfang U des mindestens einen Stromleiters größer ist als das Zweieinhalbfache der Wurzel des Produkts aus einer Querschnittsfläche A des mindestens einen Stromleiters und der Kreiszahl $\pi$. Der mindestens eine Stromleiter kann eine Reihe von Einzel-Stromleitern umfassen, wobei der Umfang U des mindestens einen Stromleiters dem Hüllumfang der Einzel-Stromleiter entspricht und wobei die Querschnittsfläche A des mindestens einen Stromleiters aus der Summe der Querschnittsflächen der Einzel-Stromleiter bildbar ist. Die Werkzeugmaschine kann zur Versorgung mit elektrischer Energie mit einer Energieversorgungsvorrichtung verbunden werden. In einem zweiten Aspekt betrifft die Erfindung eine Energieversorgungsvorrichtung zur Verwendung in einer erfindungsgemäßen Werkzeugmaschine, d.h. zur Versorgung einer erfindungsgemäßen Werkzeugmaschine mit elektrischer Energie.

Fig. 2

EP 4 209 307 A1

## Beschreibung

Die vorliegende Erfindung betrifft eine Werkzeugmaschine, wobei die Werkzeugmaschine mindestens einen Stromleiter aufweist, wobei ein Umfang U des mindestens einen Stromleiters größer ist als das Zweieinhalbfache der Wurzel des Produkts aus einer Querschnittsfläche A des mindestens einen Stromleiters und der Kreiszahl $\pi$. Der mindestens eine Stromleiter kann eine Reihe von Einzel-Stromleitern umfassen, wobei der Umfang U des mindestens einen Stromleiters dem Hüllumfang der Einzel-Stromleiter entspricht und wobei die Querschnittsfläche A des mindestens einen Stromleiters aus der Summe der Querschnittsflächen der Einzel-Stromleiter bildbar ist. Die Werkzeugmaschine kann zur Versorgung mit elektrischer Energie mit einer Energieversorgungsvorrichtung verbunden werden. In einem zweiten Aspekt betrifft die Erfindung eine Energieversorgungsvorrichtung zur Verwendung in einer erfindungsgemäßen Werkzeugmaschine, d.h. zur Versorgung einer erfindungsgemäßen Werkzeugmaschine mit elektrischer Energie.

## Hintergrund der Erfindung:

Sogenannte kabellose Werkzeugmaschinen, wie beispielsweise Akku-Schrauber, Bohrmaschinen, Sägen, Schleifgeräte, oder dergleichen, können zur Energieversorgung mit einer Energieversorgungsvorrichtung verbunden werden. Die Energieversorgungsvorrichtung kann beispielsweise als Akkumulator ("Akku") ausgebildet sein oder einen solchen umfassen. Akkumulatoren weisen üblicherweise eine Vielzahl an Energiespeicherzellen auf, auch Akku-Zellen genannt, mit deren Hilfe elektrische Energie aufgenommen, gespeichert und wieder abgegeben werden kann. Wenn der Akkumulator mit einer Werkzeugmaschine verbunden ist, kann die in den Energiespeicherzellen gespeicherte elektrische Energie an die Verbraucher (z.B. ein bürstenloser Elektromotor) der Werkzeugmaschine zugeführt werden. Zum Aufladen, d.h. Befüllen der Energiespeicherzellen mit elektrischer Energie, wird der Akkumulator mit einer Ladevorrichtung, wie einem Ladegerät, verbunden, sodass elektrische Energie zu den Energiespeicherzellen gelangen kann.

Bei der Übertragung von elektrischer Energie können hohe elektrische Belastungen auftreten. Allerdings haben nicht alle Werkzeugmaschinen einen gleichen oder ähnlichen Leistungsbedarf, d.h. die elektrischen Belastungen können je nach Energie- und/oder Leistungsbedarf der Werkzeugmaschine variieren. Um diesen hohen, ggf. je nach Leistungsbedarf der Werkzeugmaschine abweichenden elektrischen Belastungen gerecht zu werden, soll mit der Erfindung ein Stromleiter für eine Werkzeugmaschine bereitgestellt werden, der den hohen elektrischen Belastungen standhält und mit dem auch sehr große Konstantströme in einem Bereich von 50 Ampère (A), bevorzugt mehr als 70 A bzw. am meisten bevorzugt mehr als 100 A übertragen werden können.

Die Aufgabe, die der vorliegenden Erfindung zugrunde liegt, besteht darin, die Mängel und Nachteile des Standes der Technik zu überwinden und eine Werkzeugmaschine mit einem solchen Stromleiter bereitzustellen, der besonders hohen elektrischen Belastungen standhält. Darüber ist es ein Anliegen der Erfindung eine Energieversorgungsvorrichtung bereitzustellen, die mit der Werkzeugmaschine verbindbar ist und die dazu in der Lage ist, entsprechend große Konstantströme für die Werkzeugmaschine bereitzustellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

## Beschreibung der Erfindung:

Erfindungsgemäß ist eine Werkzeugmaschine mit mindestens einem Stromleiter vorgesehen, wobei ein Umfang U des mindestens einen Stromleiters größer ist als das Zweieinhalbfache der Wurzel des Produkts aus einer Querschnittsfläche A des mindestens einen Stromleiters und der Kreiszahl $\pi$. Der mindestens eine Stromleiter liegt vorzugsweise in einem Inneren bzw. Innenraum der Werkzeugmaschine vor, der vorzugsweise von einem Gehäuse umgeben und nach außen begrenzt sein kann. Der mindestens eine Stromleiter ist insbesondere dazu eingerichtet, Komponenten der Werkzeugmaschine elektrisch leitend zu verbinden, so dass Ströme zwischen den Komponenten der Werkzeugmaschine fließen können. Diese Ströme können vorzugsweise Konstantströme sein und in einem Bereich von 50 Ampère (A), bevorzugt mehr als 70 A und am meisten bevorzugt mehr als 100 A liegen. Vorteilhafterweise kann mit der Erfindung eine hochstromfähige Werkzeugmaschine bereitgestellt werden, d.h. eine Werkzeugmaschine, die aufgrund ihrer Stromleiter dazu in der Lage ist, mit solchen hohen Konstantströmen gut umzugehen bzw. ihnen standzuhalten, ohne dass es zu thermischen Überlastungen oder anderen Beeinträchtigungen kommt. Insbesondere kann mit der Erfindung ein hinsichtlich der Wärmeabgabe bzw. den thermischen Eigenschaften optimierte Stromleiter angegeben werden, wobei sich die guten thermischen Eigenschaften des Stromleiters insbesondere aus dem optimierten Verhältnis von Leitungsquerschnitt zu Leitungsumfang des Stromleiters ergeben.

Vorzugsweise können solche Ströme mit einer erfindungsgemäßen Energieversorgungsvorrichtung bereitgestellt werden. Die vorgeschlagene Werkzeugmaschine ist somit optimal dazu in der Lage, mit solchen großen Strömen umzugehen und Ströme in der genannten Größenordnung in der Werkzeugmaschine zu verteilen bzw. an die einzelnen Komponenten zu leiten. Zur Verteilung bzw. Weiterleitung der Ströme umfasst die Werkzeugmaschine den mindestens einen Stromleiter, dessen Umfang U größer ist als das Zweieinhalbfache der Wurzel des Produkts aus einer Querschnittsfläche A des mindestens einen Stromleiters und der Kreiszahl π.

Wenn die Werkzeugmaschine mit der Energieversorgungsvorrichtung verbunden ist, kann Strom bzw. elektrische Energie von der Energieversorgungsvorrichtung an die Werkzeugmaschine übertragen werden. Vorzugsweise gelangt der Strom bzw. die elektrische Energie über eine Schnittstelle in die Werkzeugmaschine, wobei die Schnittstelle weibliche und/oder männliche Kontaktpartner bzw. Kontaktstecker aufweist, durch die der Strom fließen kann. Der mindestens eine Stromleiter in der Werkzeugmaschine ist vorzugsweise dazu eingerichtet, die Schnittstelle zwischen Werkzeugmaschine und Energieversorgungsvorrichtung mit anderen Komponenten innerhalb der Werkzeugmaschine zu verbinden. Bei diesen weiteren Komponenten kann es sich beispielsweise um eine Steuer- und/oder Leistungselektronik der Werkzeugmaschine handeln oder um ihren Motor, der im Kontext der Werkzeugmaschine einen elektrischen Verbraucher darstellt.

Die Werkzeugmaschine weist mindestens einen Stromleiter auf, der einen Umfang U hat, der größer ist als das Zweieinhalbfache der Wurzel des Produkts aus einer Querschnittsfläche A des mindestens einen Stromleiters und der Kreiszahl π. Selbstverständlich kann die Werkzeugmaschine auch mehr als einen solchen Stromleiter aufweisen. Es kann im Sinne der Erfindung bevorzugt sein, dass die Komponenten der Werkzeugmaschine mit je einem Stromleiter elektrische verbunden sind. Es kann aber ebenso gut bevorzugt sein, dass mehr als ein solcher Stromleiter zwischen den Komponenten der Werkzeugmaschine angeordnet vorliegt, um die jeweils beteiligten Komponenten der Werkzeugmaschine elektrisch leitend miteinander zu verbinden Beispielsweise können jeweils zwei Stromleiter vorgesehen sein, um beispielsweise zwischen der Elektronik, dem Motor und/oder der Schnittstelle der Werkzeugmaschine angeordnet zu sein.

Der mindestens eine Stromleiter weist einen Umfang U auf, der größer ist als das Zweieinhalbfache der Wurzel des Produkts aus einer Querschnittsfläche A des mindestens einen Stromleiters und der Kreiszahl π. Insbesondere kann der Umfang U des mindestens einen Stromleiters durch folgende Relation ausgedrückt werden:

$$U > 2{,}5 \cdot \sqrt{(A \cdot \pi)},$$

wobei der Buchstabe «A» für die Querschnittsfläche bzw. den Querschnitt des Stromleiters steht. Es ist im Sinne der Erfindung bevorzugt, dass zur Querschnittsfläche des Stromleiters nur die stromführenden bzw. stromleitenden Bereiche berücksichtigt werden und etwaige Isolierungen unberücksichtigt bleiben. Mit anderen Worten werden bei der Ermittlung der Querschnittsfläche des Stromleiters in einer Schnittdarstellung lediglich die stromführenden Bereiche und Flächen berücksichtigt, vorzugsweise eventuell vorhandene Isolierungsbereiche oder Isolierungsflächen aber nicht. Wenn der Stromleiter als stromführendes Material Kupfer oder eine Kupferlegierung umfasst, können die Kupfer- oder kupferhaltigen Bereiche in der Schnittdarstellung als Querschnittsfläche A des Stromleiters betrachtet werden. Es ist im Sinne der Erfindung bevorzugt, dass die Begriffe «Querschnittsfläche A» und «Querschnitt A» synonym verwendet werden. Die Kreiszahl π (pi) lautet in guter Näherung 3,1416, wobei die Kreiszahl pi und der Umgang mit ihr dem Fachmann bekannt ist.

Die Erfinder haben erkannt, dass Stromleiter, die die genannte Relation erfüllen, besonders gut geeignet sind, in Werkzeugmaschine zur Leitung von Strömen bzw. elektrischer Energie eingesetzt zu werden. Überraschenderweise hat sich gezeigt, dass solche Stromleiter den hohen Strömen, die von einer vorgeschlagenen Energieversorgungsvorrichtung bereitgestellt werden können, besonders gut standhalten, ohne dass es zu thermischen Beeinträchtigungen am Stromleiter oder seiner Isolierung kommt. Mit der Erfindung können Stromleiter bereitgestellt werden, die ein besonders günstiges Verhältnis von Umfang U zu Querschnittsfläche A aufweisen. Dadurch kann die Wärmeabgabe des Stromleiter an seine Umgebung im Vergleich zu konventionellen Stromleitern, wie sie aus dem Stand der Technik bekannt sind, deutlich verbessert werden, so dass unerwünschte Wärme besonders gut aus dem Bereich des Stromleiters abgeführt werden kann. Mithin kann mit der Erfindung eine Werkzeugmaschine mit erheblich verbesserter Stromtragfähigkeit bereitgestellt werden, die aufgrund der verbesserten Wärmeabgabe ihrer Stromleiter besonders resistent gegenüber thermischen Überlastungen ist.

Der mindestens eine Stromleiter kann beispielsweise als Litze ausgebildet sein. Der Stromleiter kann ein- oder mehradrig ausgebildet sein oder auch eine Isolierung umfassen. Die Isolierung kann Kunststoff umfassen oder aus Kunststoff gebildet sein. Wenn der Stromleiter mehradrig ausgebildet ist, kann der Stromleiter mehrere Einzel-Leiter umfassen. Die Querschnittsfläche A in obiger Relation, die den Stromleiter charakterisiert, wird dann vorzugsweise aus der Summe der Querschnittsflächen $A\_i$ der Einzel-Leiter gebildet. Wenn der Stromleiter beispielsweise zwei Einzel-Leiter umfasst, die eine Querschnittsfläche $A\_1 = 1$ mm$^2$ und $A\_2 = 2$ mm$^2$ aufweisen, so würde die Querschnittsfläche A des Stromleiters in diesem Beispiel $A = 3$ mm$^2$ betragen. Im Kontext der vorliegenden Erfindung wird der Einzel-Leiter vorzugsweise als kleinste, untrennbare Einzeleinheit bzw. Untereinheit eines Stromleiters betrachtet. Es ist im Sinne der Erfindung bevorzugt, dass die Querschnittsfläche A des mindestens einen Stromleiters aus der Summe der Querschnittsflächen der Einzel-Stromleiter gebildet werden kann: $A = A\_{ges} = \sum A\_i$. Bei einem einadrigen Stromleiter entspricht die Querschnittsfläche A vorzugsweise der Querschnittsfläche A des einen Einzel-Leiters, der den einadrigen Stromleiter bildet.

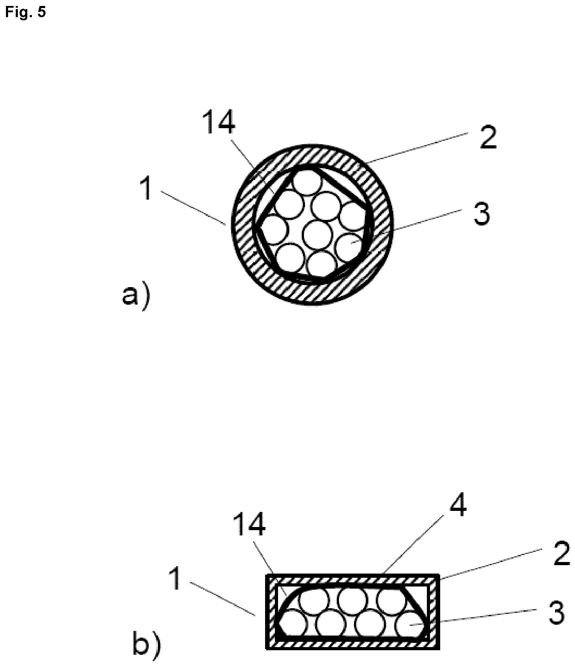

Der Umfang U in obiger Relation, die den Stromleiter charakterisiert, entspricht bei einem Stromleiter, der aus mehreren Einzel-Leiter gebildet wird, vorzugsweise dem Hüllumfang der Einzel-Stromleiter. Der Hüllumfang kann vorzugsweise dadurch gebildet werden, dass die am meisten außen liegenden Punkte des Bündels aus Einzel-Leitern im Wesentlichen direkt, d.h. tangential, miteinander verbunden werden. Der Hüllumfang kann insbesondere als Länge einer Linie betrachtet werden, wobei die Linie in einer Schnittdarstellung die Fläche der stromführenden Einzel-Litzen umschließt. Beispiele für den Hüllumfang eines mehradrigen Stromleiters sind in Fig. 5 abgebildet. Bei einem einadrigen Stromleiter entspricht der Hüllumfang vorzugsweise dem Umfang des einen Einzel-Leiters, der den einadrigen Stromleiter bildet.

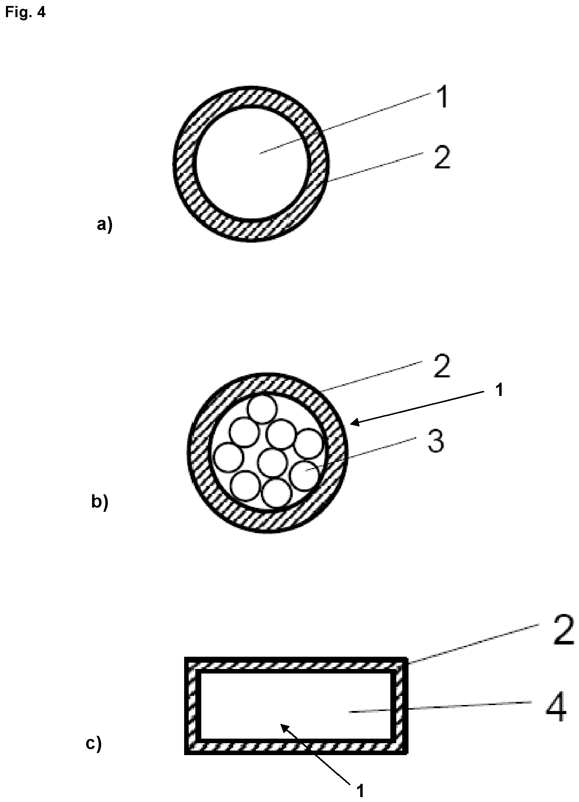

Die Querschnittsfläche A des Stromleiters kann eine im Wesentlichen kreisförmige Grundform aufweisen. Die Querschnittsfläche A des Stromleiters kann aber auch jede andere denkbare geometrische Form aufweisen. Beispielsweise kann die Querschnittsfläche A des Stromleiters eine rechteckige, quadratische, elliptische, dreieckige, mehreckige, rautenförmige oder trapezförmige Grundfläche aufweisen, ohne darauf beschränkt zu sein. Unterschiedliche Möglichkeiten der Ausgestaltung des Stromleiters sind in Fig. 4 dargestellt.

Es ist im Sinne der Erfindung bevorzugt, dass der mindestens eine Stromleiter eine Stromtragfähigkeit I aufweist, wobei die Stromtragfähigkeit I des mindestens einen Stromleiters größer ist als Zweiundzwanzigfache des Ausdrucks $A^{0,65}$, wobei A die Querschnittsfläche des mindestens einen Stromleiters ist. Die Relation $I > 22 \cdot A^{0,65}$ bzw. $I > 22 \cdot A^{0,65}$ gilt insbesondere dann, wenn die Querschnittsfläche des mindestens einen Stromleiters in der Einheit Quadratmillimeter ($mm^2$) und die Stromtragfähigkeit I in der Einheit Ampère (A) angegeben werden. Es ist im Sinne der Erfindung bevorzugt, dass die Werkzeugmaschine mindestens einen Stromleiter umfasst, der eine Stromleitfähigkeit von größer als dem Zweiundzwanzigfachen des Ausdrucks $A^{0,65}$ aufweist.

Es ist im Sinne der Erfindung bevorzugt, dass die Querschnittsfläche A des mindestens einen Stromleiters in einem Bereich von 1,65 $mm^2$ und 10,25 $mm^2$ liegt. Tests haben gezeigt, dass vor allem Stromleiter mit Querschnittsflächen in dem genannten Bereich besonders vorteilhafte thermische Eigenschaften aufweist. Der mindestens eine Stromleiter kann insbesondere Kupfer aufweisen oder aus Kupfer gebildet sein.

Es ist im Sinne der Erfindung bevorzugt, dass die Werkzeugmaschine zur Versorgung mit elektrischer Energie mit einer Energieversorgungsvorrichtung verbindbar ist. Vorzugsweise kann auch die Energieversorgungsvorrichtung einen Stromleiter aufweisen, dessen Umfang U größer ist als das Zweieinhalbfache der Wurzel des Produkts aus einer Querschnittsfläche A des mindestens einen Stromleiters und der Kreiszahl π. Es kann im Sinne der Erfindung auch bevorzugt sein, dass die Energieversorgungsvorrichtung mindestens einen Stromleiter aufweist, wobei der mindestens eine Stromleiter eine Stromtragfähigkeit I aufweist, die größer ist als Zweiundzwanzigfache des Ausdrucks $A^{0,65}$, wobei A die Querschnittsfläche des mindestens einen Stromleiters ist.

Vorteilhafterweise kann mit der Erfindung ein System zur Versorgung von Werkzeugmaschinen mit elektrischer Energie bereitgestellt werden, wobei das System eine Werkzeugmaschine und eine Energieversorgungsvorrichtung umfasst. Mit dem System können hohe Konstantströme in einem Bereich von 50 A, bevorzugt mehr als 70 A bzw. am meisten bevorzugt mehr als 100 A von der Energieversorgungsvorrichtung an die Werkzeugmaschine übertragen und dort an die Komponenten und Verbraucher innerhalb der Werkzeugmaschine verteilt werden. Dazu weisen die Werkzeugmaschine und/oder die Energieversorgungsvorrichtung Stromleiter auf, deren Umfang U größer ist als das Zweieinhalbfache der Wurzel des Produkts aus einer Querschnittsfläche A des mindestens einen Stromleiters und der Kreiszahl π. Alternativ können Stromleiter verwendet werden, deren Stromtragfähigkeit I die Relation $I > 22 \cdot A^{0,65}$ bzw. $I > 22 \cdot A^{0,65}$ erfüllt.

Die Energieversorgungsvorrichtung kann vorzugsweise mindestens einen Akkumulator («Akku») umfassen, wobei die Energieversorgungsvorrichtung dazu eingerichtet ist, die Werkzeugmaschine mit elektrischer Energie zu versorgen. Die Abgabe von elektrischer Energie von der Energieversorgungsvorrichtung an die Werkzeugmaschine erfolgt insbesondere im verbundenen Zustand, in dem die Werkzeugmaschine über eine Schnittstelle mit der Energieversorgungsvorrichtung verbunden vorliegt. Die Schnittstelle bzw. die beteiligten Verbindungspartner «Werkzeugmaschine» und «Energieversorgungsvorrichtung», können weibliche und männliche Kontaktpartner aufweisen, wobei die weiblichen und männlichen Kontaktpartner im verbundenen Zustand so ineinandergreifen, dass über einen Kontaktbereich zwischen den Verbindungspartnern elektrischer Strom bzw. elektrische Energie fließen kann.

Bei der Energieversorgungsvorrichtung handelt es sich vorzugsweise um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben.

Es ist im Sinne der Erfindung bevorzugt, dass die Energieversorgungsvorrichtung mindestens einer Zelle umfasst, wobei die mindestens eine Zelle weist einen Innenwiderstand DCR_I von kleiner als 10 Milliohm (mOhm) auf. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Es ist im Sinne der Erfindung bevorzugt, dass ein Verhältnis eines Widerstands der mindestens einen Zelle zu einer Oberfläche A_Z der mindestens einen Zelle kleiner als 0,2 Milliohm/cm$^2$ ist, bevorzugt kleiner als 0,1 Milliohm/cm$^2$ und am meisten bevorzugt kleiner als 0,05 Milliohm/cm$^2$. Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V_Z der mindestens einen Zelle kleiner als 0,4 Milliohm/cm$^3$ ist, bevorzugt kleiner als 0,3 Milliohm/cm$^3$ und am meisten bevorzugt kleiner als 0,2 Milliohm/cm$^3$. Der Fachmann kennt für übliche geometrische Formen, wie Quader, Würfel, Kugel oder dergleichen, die Formeln zur Berechnung der Oberfläche oder des Volumens eines solchen geometrischen Körpers.

Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen V_Z der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden · Ampère). Selbstverständlich kann der Erwärmungskoeffizient auch Zwischenwerte, wie 0,56 W/(Ah.A); 0,723 W/(Ah.A) oder 0,925 W/(Ah·A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen à fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche $A\_Z$ und ein Volumen $V\_Z$ aufweist, wobei ein Verhältnis $A\_Z/V\_Z$ von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche $A\_Z$ der mindestens einen Zelle ist größer ist als beispielsweise das Achtfache der dritten Wurzel des Quadrats des Volumens $V\_Z$ kann vorzugsweise auch durch die Formel $A\_Z > 8*(V\_Z)^{(2/3)}$ zum Ausdruck gebracht werden. In einer anderen Schreibweise kann dieser Zusammenhang dadurch beschrieben werden, dass das Verhältnis $(A\_Z)/(V\_Z)$ von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in $m^2$ in die obige Formel eingesetzt wird, so wird für das Volumen vorzugsweise ein Wert in der Einheit $m^3$ eingesetzt. Wenn beispielsweise ein Wert für die Oberfläche in der Einheit $cm^2$ in die obige Formel eingesetzt wird, so wird für das Volumen vorzugsweise ein Wert in der Einheit $cm^3$ eingesetzt. Wenn beispielsweise ein Wert für die Oberfläche in der Einheit $mm^2$ in die obige Formel eingesetzt wird, so wird für das Volumen vorzugsweise ein Wert in der Einheit $mm^3$ eingesetzt.

Zellgeometrien, die beispielsweise die Relation von $A\_Z > 8*(V\_Z)^{(2/3)}$ erfüllen, weisen vorteilhafterweise ein besonders günstiges Verhältnis zwischen der für die Kühlwirkung maßgeblichen Außenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche $A\_Z$ von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens $V\_Z$ der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass Energieversorgungsvorrichtung mindestens eine Energiespeicherzelle umfasst, wobei die Energieversorgungsvorrichtung dazu eingerichtet ist, einen maximalen Konstant-Strom von größer als 50 Ampère, bevorzugt größer als 70 Ampère, am meisten bevorzugt größer 100 Ampère abzugeben. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 50 und 70 A als offenbart gelten, also zum Beispiel 51; 62,3; 54, 65,55 oder 57,06 Ampère usw. Darüber hinaus sollen auch Werte zwischen 70 und 100 A als offenbart gelten, also zum Beispiel 72; 83,3; 96, 78,55, 87,25 oder 98,07 Ampère usw.

Es ist im Sinne der Erfindung bevorzugt, dass die Energieversorgungsvorrichtung eine Entlade-C-Rate von größer als $80 \cdot t^{(-0,45)}$ aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von $80 \cdot t^{(-0,45)}$ bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 50 Ampère, bevorzugt größer als 70 Ampère oder noch mehr bevorzugt größer als 100 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1    schematische Schnittdarstellung einer bevorzugten Ausgestaltung der Energieversorgungsvorrichtung

Fig. 2    schematische Schnittdarstellung einer Werkzeugmaschine mit einer bevorzugten Ausgestaltung der Energieversorgungsvorrichtung

Fig. 3    schematische Schnittdarstellung einer bevorzugten Ausgestaltung der Werkzeugmaschine

Fig. 4    schematische Schnittdarstellungen von möglichen bevorzugten Ausgestaltungen des Stromleiters

Fig. 5    Beispiele für einen Stromleiter zur Verdeutlichung des Begriffs «Hüllumfang»

## Ausführungsbeispiele und Figurenbeschreibung:

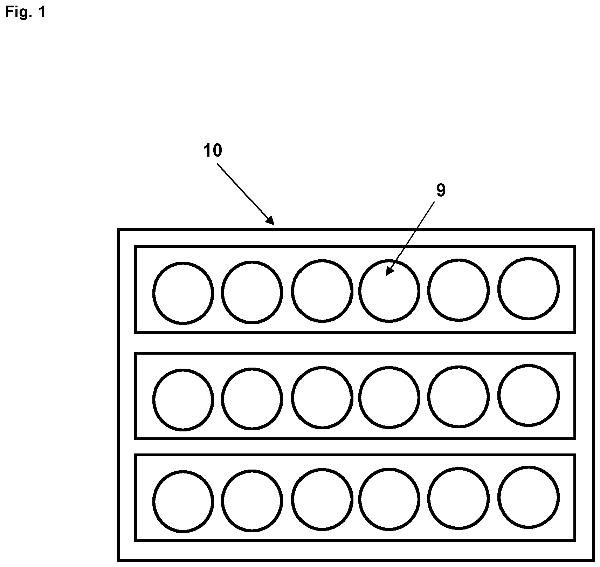

Figur 1 zeigt eine schematische Schnittdarstellung einer bevorzugten Ausgestaltung der Energieversorgungsvorrichtung 10. Die in Fig. 1 dargestellte Energieversorgungsvorrichtung 10 weist achtzehn Energiespeicherzellen 9 auf, wobei die achtzehn Zellen 9 in drei Strängen innerhalb der Energieversorgungsvorrichtung 10 angeordnet vorliegen. Die Zellen 9 werden insbesondere durch die Kreise symbolisiert, während die Stränge durch die länglichen Rechtecke symbolisiert werden, die die Kreise («Zellen 9») umgeben.

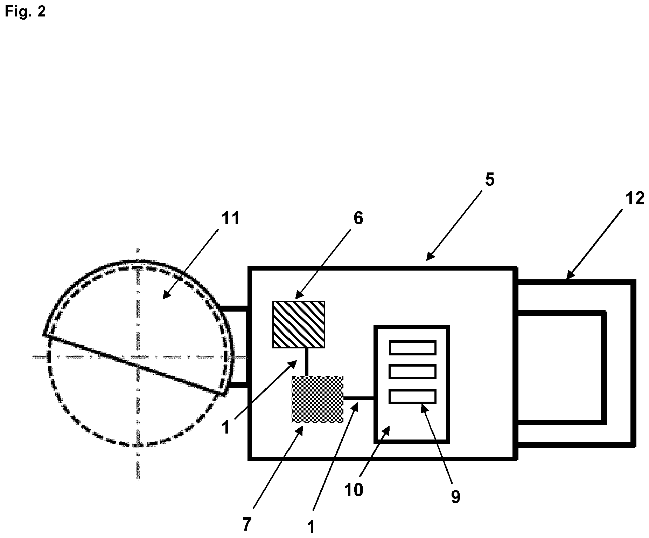

Fig. 2 zeigt eine schematische Ansicht einer Werkzeugmaschine 5 mit einer vorgeschlagenen Energieversorgungsvorrichtung 10. Bei der Werkzeugmaschine 5 kann es sich beispielsweise um einen Trennschleifer handeln, der als Werkzeug 11 eine Trennscheibe aufweist. Die Werkzeugmaschine 5 kann einen Griff 12 aufweisen, der beispielsweise als hinterer Handgriff ausgebildet ist. Außerdem kann die Werkzeugmaschine 5 einen Motor 6, eine Elektronik 7 und/oder eine Energieversorgungsvorrichtung 10 aufweisen, wobei der Motor 6, die Elektronik 7 und/oder die Energieversorgungsvorrichtung 10 über einen Stromleiter 1 miteinander verbunden werden können.

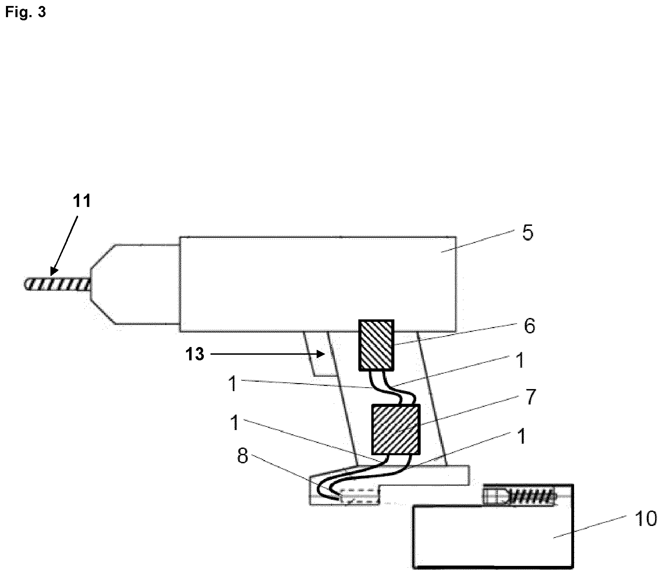

Fig. 3 zeigt eine schematische Schnittdarstellung einer bevorzugten Ausgestaltung der Werkzeugmaschine 5. Die Werkzeugmaschine 5 weist ein Werkzeug 11, wobei das Werkzeug 11 beispielsweise ein Bohrer sein kann. Die Werkzeugmaschine 5 kann mit Hilfe eines Bedienelements 13 ein- oder ausgeschaltet werden. Die Werkzeugmaschine 5 kann darüber hinaus mit einer Energieversorgungsvorrichtung 10 verbunden werden, um von der Energieversorgungsvorrichtung 10 elektrische Energie zu beziehen bzw. um von der Energieversorgungsvorrichtung 10 mit elektrischer Energie versorgt zu werden. Die Werkzeugmaschine 5 kann einen Motor 6, eine Elektronik 7 und/oder ein Schnittstelle 8 aufweisen, wobei die Schnittstelle 8 dazu eingerichtet ist, die Werkzeugmaschine 5 mit der Energieversorgungsvorrichtung 10 zu verbinden. Dabei kann mit Hilfe der Schnittstelle 8 insbesondere eine mechanische und eine elektrische Verbindung zwischen der Werkzeugmaschine 5 und der Energieversorgungsvorrichtung 10 hergestellt werden.

Die Komponenten der Werkzeugmaschine 5, d.h. der Motor 6, die Elektronik 7 und die Schnittstelle 8, können untereinander durch Stromleiter 1 verbunden vorliegen. Beispielsweise können Stromleiter 1 zwischen dem Motor 6 und der Elektronik 7 bzw. zwischen der Elektronik 7 und der Schnittstelle 8 der Werkzeugmaschine 5 vorgesehen sein. Die Stromleiter 1 sind vorzugsweise dazu eingerichtet, dass elektrische Ströme zwischen den Komponenten 6, 7, 8 der Werkzeugmaschine 5 fließen können. Mithin stellen die Stromleiter 1 eine elektrische Verbindung zwischen den Komponenten 6, 7, 8 der Werkzeugmaschine 5 her. Selbstverständlich können auch andere Komponenten der Werkzeugmaschine 5 mit Hilfe der Stromleiter 1 untereinander verbunden werden. Beispielsweise kann auch eine direkte elektrische Verbindung durch einen Stromleiter 1 zwischen der Schnittstelle 8 und dem Motor 6 der Werkzeugmaschine 5 vorgesehen sein.

Mögliche Ausgestaltungen des Stromleiters 1 werden in Figur 4 dargestellt. Beispielsweise zeigt Teilfigur 4a) einen einadrigen Stromleiter 1 mit einer Isolierung 2. Die Formulierung «einadrig» ist in diesem Zusammenhand so zu verstehen, dass der Stromleiter 1 massiv aus einem Strang Metall, beispielsweise Kupfer, gebildet ist. Davon abweichend wird in Teilfigur 4b) ein Stromleiter 1 abgebildet, der eine Reihe von Einzel-Leitern 3 umfasst. Die Einzel-Leiter 3 können beispielsweise dünne Kupferdrähte darstellen, die im Inneren einer Isolierung 2 angeordnet sind. Die Einzel-Leiter 3 können beispielsweise verdrillt innerhalb der Isolierung 2 vorliegen. Stromleiter 1, die mehrere Einzel-Leiter 3 umfassen, können im Sinne der Erfindung vorzugsweise als «mehradrig» bezeichnet werden. Der Stromleiter 1, der in der Werkzeugmaschine 5 verbaut ist, kann beispielsweise auch eine nicht-kreisförmige Querschnittsfläche aufweisen. Ein solcher Stromleiter 4 mit nicht-kreisförmiger Querschnittsfläche ist in Teilfigur 4c) dargestellt. Der Stromleiter 1 in den Teilfiguren 4a) und 4b) weist dahingegen eine im Wesentlichen kreisförmige Querschnittsfläche auf.

In Figur 5 werden Beispiele für einen Stromleiter 1 zur Verdeutlichung des Begriffs «Hüllumfang» 14 dargestellt. In Teilfigur 5a) ist ein Stromleiter 1 mit einer in einer Schnittdarstellung im Wesentlichen kreisförmigen Querschnittsfläche A dargestellt. Der in Teilfigur 5a) abgebildete Stromleiter 1 weist neun Einzel-Leiter 3 auf, die von einer Isolierung 2 umgeben sind. Eingezeichnet ist in Figur 5 insbesondere der Hüllumfang 14, der die äußeren Punkte des Bündels aus Einzel-Leitern 3 wie eine straffe Hülle umgibt. Der Hüllumfang 14 liegt vorzugsweise zwischen einem Schrumpfschlauch vor, der gedanklich um das Bündel aus Einzel-Leitem 3 gelegt werden kann, und einer Innenseite der optionalen Isolierung 2. Der Hüllumfang 14 weist vorzugsweise eine Länge auf oder stellt eine Länge dar, wobei diese Länge der Länge einer Verbindungslinie der am weitesten außen liegenden Punkte des Bündels aus Einzel-Leitern 3 entspricht.

In Teilfigur 5b) ist ein Stromleiter 1 mit einer Querschnittfläche A abgebildet, wobei die Querschnittsfläche A im Wesentlichen nicht kreisförmig ist. Der in Teilfigur 5b) abgebildete Stromleiter 4 weist in einer Schnittdarstellung insbesondere eine rechteckige Querschnittsfläche A auf. Der in Teilfigur 5b) abgebildete Stromleiter 4 weist sieben Einzel-Leiter 3 auf, die von einer Isolierung 2 umgeben sind. Darüber hinaus ist in Teilfigur 5b) der Hüllumfang 14 abgebildet, der das Bündel aus Einzel-Leitern 3 umgibt.

## Bezugszeichenliste

| | |
|---|---|
| 1 | Stromleiter |
| 2 | optional: Isolierung |
| 3 | Einzel-Stromleiter |
| 4 | Stromleiter mit nicht-kreisförmigen Querschnitt |
| 5 | Werkzeugmaschine |
| 6 | Motor der Werkzeugmaschine |
| 7 | Elektronik der Werkzeugmaschine |
| 8 | Schnittstelle der Werkzeugmaschine zur Aufnahme einer Energieversorgungsvorrichtung |
| 9 | Zelle einer Energieversorgungsvorrichtung |
| 10 | Energieversorgungsvorrichtung |
| 11 | Werkzeug der Werkzeugmaschine |
| 12 | Griff der Werkzeugmaschine |
| 13 | Bedienelement der Werkzeugmaschine, z. B. Schalter |
| 14 | Hüllumfang |

## Patentansprüche

1. Werkzeugmaschine (5)
   **dadurch gekennzeichnet, dass**
   die Werkzeugmaschine (5) mindestens einen Stromleiter (1) aufweist, wobei ein Umfang U des mindestens einen Stromleiters (1) größer ist als das Zweieinhalbfache der Wurzel des Produkts aus einer Querschnittsfläche A des mindestens einen Stromleiters (1) und der Kreiszahl $\pi$.

2. Werkzeugmaschine (5) nach Anspruch 1
   **dadurch gekennzeichnet, dass**
   der mindestens eine Stromleiter (1) eine Stromtragfähigkeit I aufweist, wobei die Stromtragfähigkeit I des mindestens einen Stromleiters (1) größer ist als Zweiundzwanzigfache des Ausdrucks $A^{0,65}$, wobei A die Querschnittsfläche des mindestens einen Stromleiters (1) ist.

3. Werkzeugmaschine (5) nach Anspruch 1 oder 2
   **dadurch gekennzeichnet, dass**
   der mindestens eine Stromleiter (1) eine Reihe von Einzel-Stromleitem (3) umfasst, wobei der Umfang U des mindestens einen Stromleiters (1) dem Hüllumfang (14) der Einzel-Stromleiter (3) entspricht und wobei die Querschnittsfläche A des mindestens einen Stromleiters (1) aus der Summe der Querschnittsflächen der Einzel-Stromleiter (3) bildbar ist.

4. Werkzeugmaschine (5) nach einem der vorhergehenden Ansprüche
**dadurch gekennzeichnet, dass**
die Querschnittsfläche A des mindestens einen Stromleiters (1) in einem Bereich von 1,65 mm$^2$ und 10,25 mm$^2$ liegt.

5. Werkzeugmaschine (5) nach einem der vorhergehenden Ansprüche
**dadurch gekennzeichnet, dass**
der mindestens eine Stromleiter (1) eine Isolierung (2) aufweist.

6. Werkzeugmaschine (5) nach einem der vorhergehenden Ansprüche
**dadurch gekennzeichnet, dass**
der mindestens eine Stromleiter (1) Kupfer aufweist.

7. Werkzeugmaschine (5) nach einem der vorhergehenden Ansprüche
**dadurch gekennzeichnet, dass**
der mindestens eine Stromleiter (1) eine nicht-kreisförmige Querschnittsfläche A aufweist.

8. Werkzeugmaschine (5) nach einem der vorhergehenden Ansprüche
**dadurch gekennzeichnet, dass**
die Werkzeugmaschine (5) zur Versorgung mit elektrischer Energie mit einer Energieversorgungsvorrichtung (10) verbindbar ist.

9. Werkzeugmaschine (5) nach einem der vorhergehenden Ansprüche
**dadurch gekennzeichnet, dass**
der mindestens eine Stromleiter (1) dazu eingerichtet ist, einen Motor (6), eine Elektronik (7) und/oder eine Schnittstelle (8) zur Aufnahme der Energieversorgungsvorrichtung (10) zu verbinden.

10. Energieversorgungsvorrichtung (10) zur Verwendung in einer Werkzeugmaschine (5) nach einem der Ansprüche 1 bis 9
**dadurch gekennzeichnet, dass**
die Energieversorgungsvorrichtung (10) mindestens eine Energiespeicherzelle (9) umfasst, wobei die mindestens eine Energiespeicherzelle (9) einen Innenwiderstand DCR_I von kleiner als 10 Milliohm aufweist.

11. Energieversorgungsvorrichtung (10) zur Verwendung in einer Werkzeugmaschine (10) nach einem der Ansprüche 1 bis 9
**dadurch gekennzeichnet, dass**
die Energieversorgungsvorrichtung (10) mindestens eine Energiespeicherzelle (9) umfasst, wobei die mindestens Zelle (9) eine Oberfläche A_Z und ein Volumen V_Z aufweist, wobei ein Verhältnis (A_Z)/(V_Z) von Oberfläche zu Volumen größer ist als das Sechsfache, bevorzugt das Achtfache und besonders bevorzugt das Zehnfache des Kehrwerts der dritten Wurzel des Volumens.

12. Energieversorgungsvorrichtung (10) zur Verwendung in einer Werkzeugmaschine (5) nach einem der Ansprüche 1 bis 9
**dadurch gekennzeichnet, dass**
die Energieversorgungsvorrichtung (10) mindestens eine Energiespeicherzelle (9) umfasst, wobei ein Verhältnis eines Widerstands der mindestens einen Energiespeicherzelle (9) zu einer Oberfläche A_Z der mindestens einen Zelle (2) kleiner als 0,2 Milliohm/cm$^2$ ist, bevorzugt kleiner als 0,1 Milliohm/cm$^2$, am meisten bevorzugt kleiner als 0,05 Milliohm/cm$^2$.

13. Energieversorgungsvorrichtung (10) zur Verwendung in einer Werkzeugmaschine (5) nach einem der Ansprüche 1 bis 9
**dadurch gekennzeichnet, dass**
die Energieversorgungsvorrichtung (10) eine Kapazität von wenigstens 2,2 Ah, bevorzugt wenigstens 2,5 Ah aufweist.

14. Energieversorgungsvorrichtung (10) zur Verwendung in einer Werkzeugmaschine (5) nach einem der Ansprüche 1 bis 9
**dadurch gekennzeichnet, dass**
die Energieversorgungsvorrichtung (10) mindestens einen Stromleiter (1) aufweist, wobei ein Umfang U des mindestens einen Stromleiters (1) größer ist als das Zweieinhalbfache der Wurzel des Produkts aus einer Querschnittsfläche A des mindestens einen Stromleiters (1) und der Kreiszahl π.

15. Energieversorgungsvorrichtung (10) zur Verwendung in einer Werkzeugmaschine (5) nach einem der Ansprüche 1 bis 9
**dadurch gekennzeichnet, dass**
die Energieversorgungsvorrichtung (10) mindestens einen Stromleiter (1) aufweist, wobei der mindestens eine Stromleiter (1) eine Stromtragfähigkeit I aufweist, die größer ist als Zweiundzwanzigfache des Ausdrucks A^0,65, wobei A die Querschnittsfläche des mindestens einen Stromleiters (1) ist.

**Fig. 1**

**Fig. 2**

**Fig. 3**

**Fig. 4**

a)

1

2

b)

2

1

3

c)

2

4

1

**Fig. 5**

Europäisches
Patentamt

European
Patent Office

Office européen
des brevets

**EUROPÄISCHER RECHERCHENBERICHT**

Nummer der Anmeldung

EP 22 15 0869

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2014 217987 A1 (BOSCH GMBH ROBERT [DE]) 10. März 2016 (2016-03-10) <br> * Absatz [0001] * <br> * Absatz [0034] – Absatz [0049] * <br> * Abbildungen * <br> ----- | 1-15 | INV. <br> B25F5/00 <br> H01M50/247 |
| X | US 2020/127339 A1 (NAKANO YASUSHI [JP] ET AL) 23. April 2020 (2020-04-23) <br> * Absatz [0001] * <br> * Absatz [0005] – Absatz [0012] * <br> * Abbildungen * <br> ----- | 1-15 | |
| X | US 4 794 273 A (MCCULLOUGH TIMOTHY J [US] ET AL) 27. Dezember 1988 (1988-12-27) <br> * Spalte 1, Zeile 6 – Zeile 14 * <br> * Spalte 18, Zeile 37 – Zeile 68 * <br> * Abbildungen * <br> ----- | 1,3 | |
| A | US 2015/151423 A1 (BURGER HELMUT [DE] ET AL) 4. Juni 2015 (2015-06-04) <br> * Absatz [0001] * <br> * Absatz [0019] – Absatz [0039] * <br> * Abbildungen * <br> ----- | 1-15 | RECHERCHIERTE SACHGEBIETE (IPC) |
| A | EP 3 014 690 B1 (TECHTRONIC POWER TOOLS TECH LTD [CN]) 11. März 2020 (2020-03-11) <br> * Absatz [0001] * <br> * Absatz [0003] – Absatz [0008] * <br> * Absatz [0011] – Absatz [0019] * <br> * Abbildungen * <br> ----- | 1-15 | B25F <br> H01M |
| A | EP 3 615 274 B1 (HILTI AG [LI]) 3. März 2021 (2021-03-03) <br> * Absatz [0001] – Absatz [0015] * <br> * Abbildungen * <br> ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 25. Juni 2022 | van Woerden, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 0869

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2022

| Im Recherchenbericht angeführtes Patentdokument | Datum der Veröffentlichung | Mitglied(er) der Patentfamilie | Datum der Veröffentlichung |
|---|---|---|---|
| DE 102014217987 A1 | 10-03-2016 | CN 105406012 A | 16-03-2016 |
| | | DE 102014217987 A1 | 10-03-2016 |
| | | EP 2996174 A1 | 16-03-2016 |
| | | US 2016072106 A1 | 10-03-2016 |
| US 2020127339 A1 | 23-04-2020 | AU 2018307416 A1 | 23-01-2020 |
| | | CA 3068694 A1 | 31-01-2019 |
| | | CN 110832668 A | 21-02-2020 |
| | | EP 3660944 A1 | 03-06-2020 |
| | | JP 6962370 B2 | 05-11-2021 |
| | | JP WO2019022072 A1 | 09-07-2020 |
| | | NZ 760515 A | 25-02-2022 |
| | | US 2020127339 A1 | 23-04-2020 |
| | | WO 2019022072 A1 | 31-01-2019 |
| US 4794273 A | 27-12-1988 | KEINE | |
| US 2015151423 A1 | 04-06-2015 | CN 104520073 A | 15-04-2015 |
| | | DE 102012209925 A1 | 19-12-2013 |
| | | EP 2861384 A1 | 22-04-2015 |
| | | JP 6203837 B2 | 27-09-2017 |
| | | JP 2015519214 A | 09-07-2015 |
| | | US 2015151423 A1 | 04-06-2015 |
| | | WO 2013186047 A1 | 19-12-2013 |
| EP 3014690 B1 | 11-03-2020 | AU 2014301796 A1 | 28-01-2016 |
| | | CA 2916540 A1 | 31-12-2014 |
| | | CN 105359328 A | 24-02-2016 |
| | | EP 3014690 A1 | 04-05-2016 |
| | | JP 6546914 B2 | 17-07-2019 |
| | | JP 2016537768 A | 01-12-2016 |
| | | NZ 715528 A | 27-03-2020 |
| | | NZ 754854 A | 27-03-2020 |
| | | US 2016141728 A1 | 19-05-2016 |
| | | US 2022069366 A1 | 03-03-2022 |
| | | WO 2014206323 A1 | 31-12-2014 |
| EP 3615274 B1 | 03-03-2021 | CN 110545961 A | 06-12-2019 |
| | | EP 3395505 A1 | 31-10-2018 |
| | | EP 3615274 A1 | 04-03-2020 |
| | | US 2020094329 A1 | 26-03-2020 |
| | | WO 2018197335 A1 | 01-11-2018 |

EPO FORM P0461

Für nähere Einzelheiten zu diesem Anhang : siehe Amtsblatt des Europäischen Patentamts, Nr.12/82